# EUROPEAN PATENT SPECIFICATION

(11) **EP 3 133 466 B1**
(45) Date of publication and mention of the grant of the patent: **12.06.2019**
(21) Application number: 16184988.0
(22) Date of filing: 19.08.2016
(51) Int. Cl.: G06F 1/3287, G06F 1/329, G06F 9/4401, H04M 1/725, H04W 52/02

(54) **METHOD AND DEVICE FOR REMINDING IN SHUTDOWN STATE**
VERFAHREN UND VORRICHTUNG ZUR ERINNERUNG IM ABSCHALTZUSTAND
PROCÉDÉ ET DISPOSITIF DESTINÉS À FOURNIR UN RAPPEL D'ÉTAT D'ARRÊT

(30) Priority: 19.08.2015 CN 201510512477
(43) Date of publication of application: 22.02.2017
(73) Proprietor: Xiaomi Inc., Beijing 100085 (CN)
(72) Inventor: TAN, Kangxi, Beijing 100085 (CN); HE, Li, Beijing 100085 (CN); JI, Hong, Beijing 100085 (CN)
(74) Representative: Reeve, Nicholas Edward

(56) References cited:
- EP-A1- 1 643 358
- EP-A1- 2 395 807
- US-A1- 2008 162 918
- US-A1- 2015 006 929
- US-B2- 8 316 253

## Description

### FIELD

The present disclosure relates to the field of communication technology, and more particularly to a method and a device for reminding in a shutdown state.

### BACKGROUND

As communication technology develops, more and more functions are provided for smart terminals and mobile terminals, and terminals with various functions are becoming a necessity for human life. A reminding or reminder function is a practical function, which may remind an owner of the mobile terminal at a preset time, such as for example, by setting an alarm clock reminding via an alarm application.

In the related art, a reminding alarm clock is set before a shutdown of the terminal, and after the shutdown, the terminal starts and loads a complete operating system, e.g. an Android system, when the reminding time is reached. The reminding is performed after the loading is completed. However, loading the complete operating system will take a long time and waste more electricity.

EP2395807A1 discloses an automatic activation method of an application function in a terminal, including an automatic activation interface, a user setting and a triggering condition for an automatic activation of the application function.

US8316253B2 discloses a method of controlling a portable electronic device including receiving a power-down command, determining an automatic power-up date based on an earliest one of a next preset power-up and a next time-dependent event reminder, entering a power-down state, monitoring a date and time, and automatically powering up at the automatic power-up date and time.

EP1643358A1 discloses a device comprising: a memory storing software essential to the provision of normal functions of the device; a first processing section comprising a data processor capable of executing the software, the device being capable of operating the first processing section in a normal mode in which it can execute the software and a low power mode; a second processing section having a clock for maintaining a time, and being capable of triggering behavior of the device in response to the time of the clock preceding a user-set time by a pre-set advance interval; the device being configured to, in response to triggering by the second processing section when the first processing section is in the low power mode, cause the first processing section to enter the normal mode and to load the software.

### SUMMARY OF THE INVENTION

In order to solve problems in the related art, the present disclosure provides a method and a device for reminding in a shutdown state. The present invention is defined by the appended claims, to which reference should now be made. All parts which are not part of the claims are not part of the present invention.

According to examples of a first aspect of the present disclosure, a method for providing reminders to a user is provided. The method includes: receiving a wakeup instruction from a clock circuit of the terminal in a shutdown state; executing a preset initialization operation according to the wakeup instruction, wherein the preset initialization operation does not comprise starting an operating system of the terminal; after the preset initialization operation is completed, searching for a target reminder event from reminder events pre-written, in a startup state in a preset memory region and executing (206) the target reminder event by calling a preset reminding program that is not dependent upon the operating system. The method further includes, after executing the target reminder event, identifying the target reminding event completed with an executed identification; receiving an instruction to startup the operating system; and after startup of the operating system of the terminal: obtaining unexecuted the reminder events from the preset memory region; and synchronously updating a database corresponding to a reminding program in the operating system according to the executed identifications of the obtained unexecuted reminder events and performing a reminding for unexecuted reminder events according to the updated database.

In the above examples, the wakeup instruction is received from the clock circuit in the shutdown state, the preset initialization operation is executed according to the wakeup instruction, and the preset reminding program is executed according to the pre-stored reminding event after the preset initialization operation is completed, such that the reminding event may still be reminded of even if an operating system of the device is not started or currently running. The wakeup instruction may be change in voltage level on a general purpose input/output (GPIO) pin on an integrated circuit of a controller or processing unit included in the device. The shutdown state may be described as an operating state of the device where only certain predetermined components (e.g., only the clock circuit and those other components configured to operate the clock circuit) are operational and receiving power. The reminding program may be a program run outside of the operating system. The operating system may be a layer of operational software logic that manages hardware components of the device, and also provides a foundational platform on which applications or programs may run. The operating system may also manage certain system applications for configuring attributes of the operating system or device. In addition, or as part of the operating system, the device may also include firmware. Firmware may be operational software logic stored on a memory (e.g., flash memory, or a type of read only memory) of a hardware component of the device that controls certain features of the hardware component.

Therefore, a time-consuming problem and an electricity-consuming problem caused by starting the operating system may be avoided, the electric energy may be saved, and meanwhile a call function will not be started, a radiofrequency radiation may be prevented, and the user experience is improved.

Alternatively, the method further includes: determining whether there is a reminding event before a shutdown; and writing the reminding event into a preset memory region if there is a reminding event.

In the above examples, by determining whether there is a reminding event before the shutdown, and by writing the reminding event into the preset memory region, the reminding event may still be reminded of even if the operating system is not started, and the reminding for the reminding event is realized.

Alternatively, the method further includes: obtaining a target reminding time closest to a current time from the reminding events prewritten in the preset memory region before the shutdown; determining a first counting time according to the target reminding time; and writing the first counting time into the clock circuit, in which receiving the wakeup instruction from the clock circuit includes: receiving the wakeup instruction sent by the clock circuit when the first counting time is reached.

In the above examples, the first counting time may be determined according to the target reminding time closet to the current time, and the first counting time is written into the clock circuit, such that the wakeup instruction sent by the clock circuit when the first counting time is reached is received, thus realizing reminding of the reminding event with the earliest reminding time. Meanwhile, the cost of the clock circuit may be reduced, since only one counting time is written into the clock circuit.

Alternatively, executing a preset reminding program according to a pre-stored reminding event includes: searching for a target reminding event from reminder events pre-written in a preset memory region; and
executing the target reminding event by calling the preset reminding program.

In the above examples, the target reminding event may be found in the preset memory region, and the target reminding event may be executed by calling the preset reminding program that is not dependent on the operating system, such that the reminding for the target reminding event is realized.

Alternatively, searching for a target reminding event from the events pre-written in a preset memory region includes: obtaining the reminding events pre-wrote in the preset memory region; and obtaining the target reminding event with a reminding time closest to a current time from the reminding events.

In the above examples, when there are multiple reminding events, the target reminding event with the reminding time closest to the current time may be obtained from the reminding events, such that the reminding event with the earliest reminding time is reminded of preferentially.

Alternatively, executing the target reminding event includes at least one of: obtaining a reminding content for the target reminding event, and reminding of the reminding content; obtaining a reminding language for the target reminding event, and reminding of the reminding content in the reminding language; obtaining ring data for the target reminding event, and playing the ring data; obtaining a vibration identification for the target reminding event, and performing a vibration reminding according to the vibration identification; and obtaining a repeat reminding instruction for the target reminding event, and performing a repeat reminding according to the repeat reminding instruction.

In the above examples, the reminding event may include the reminding content, and the preset reminding content may be reminded; the reminding event may also include the reminding language, and the language for the reminding content may be limited by the reminding language; the reminding event may also include ring data, and when the reminding time is reached, the ring data may be called to play, such that the preset reminding program may be avoided from storing a lot of ring data, thus saving resources; the reminding event may also include the vibration identification, the vibration reminding may be performed according to the vibration identification when the vibration identification is obtained, thus realizing the vibration reminding; and the reminding event may also include the repeat reminding instruction, and the repeat reminding may be realized according to the repeat reminding instruction. The users may choose a reminding way according to various demands, such that the user experience is improved.

Alternatively, after executing the target reminding event by calling the preset reminding program, the method further includes: identifying the target reminding event completed with an executed identification; obtaining a new target reminding time closest to the current time from unexecuted reminding events after the target reminding event is completed; determining a second counting time according to the new target reminding time; writing the second counting time into the clock circuit; and performing a shutdown.

In the above examples, the new target reminding time closest to the current time may be obtained from unexecuted reminding events, the second counting time is determined according to the new target reminding time, the second counting time is written into the clock circuit, and then the shutdown is performed, such that the reminding for the unexecuted reminding events may be performed in the shutdown state, and also the electricity-consumption is reduced.

Alternatively, after executing the target reminding event by calling the preset reminding program, the method further includes: identifying the target reminding event completed with an executed identification.

In the above examples, the target reminding event completed may be identified with the executed identification, which is convenient for the system to determine whether the target reminding event is executed via the identification.

Alternatively, the method further includes: obtaining the reminding events from the preset memory region after a startup; and updating a database corresponding to the reminding program in the operating system according to the identifications of the reminding events.

In the above examples, data stored in the preset memory region may be updated synchronously into the database, such that the reminding for the unexecuted reminding events may be performed after the startup, thus avoiding missed reminding.

According to examples of a second aspect of the present disclosure, a device is provided, the device comprising: a clock circuit; an instruction receiving unit , configured to receive a wakeup instruction from the clock circuit in a shutdown state of the device; an operation executing unit, configured to execute a preset initialization operation according to the wakeup instruction, wherein the preset initialization operation does not comprise starting an operating system; and an event reminding unit, configured to execute a preset reminding program that is not dependent upon the operating system according to a prewritten reminder event after the preset initialization operation is completed, wherein, the event reminding unit comprises: an event determining sub-unit, configured to search for a target reminder event from reminder events pre-written, in a startup state, in a preset memory region; an event reminding sub-unit, configured to execute the target reminder event by calling the preset reminding program that is not dependent on the operating system; an identifying unit configured to identify the target reminder event completed with an executed identification, after the event reminding sub-unit has executed the target reminder event; a unit configured to obtain the reminder events from the preset memory region, after startup of the operating system of the terminal device; and a unit configured to, after startup of the terminal device, synchronously update a database corresponding to a reminding program in the operating system according to the executed identifications of the reminder events such that reminding is performed on unexecuted reminder events according to the updated database.

In the above examples, by determining whether there is a reminding event before the shutdown, and by writing the reminding event into the preset memory region, the reminding event may still be reminded even if the operating system is not started, thus realizing the reminding for the reminding event.

Alternatively, the device further includes: a first counting time determining unit, configured to obtain a target reminding time closest to a current time from reminding events before the shutdown, and to determine a first counting time according to the target reminding time; and a first counting time writing unit, configured to write the first counting time into the clock circuit, in which the instruction receiving unit is configured to receive the wakeup instruction sent by the clock circuit when the first counting time is reached.

In the above examples, the first counting time may be determined according to the target reminding time closest to the current time, and the first counting time is written into the clock circuit, such that the wakeup instruction sent by the clock circuit when the first counting time is reached is received, and the reminding for the reminding event with the earliest reminding time is realized. Meanwhile, the cost of the clock circuit may be reduced, since only one counting time is written into the clock circuit.

Alternatively, the event reminding unit includes: an event determining sub-unit, configured to search for a target reminding event in a preset memory region; and an event reminding sub-unit, configured to execute the target reminding event by calling the preset reminding program.

In the above examples, the target reminding event may be found in the preset memory region, and the target reminding event may be executed by calling the preset reminding program, such that the reminding for the target reminding event is realized.

Alternatively, the event determining sub-unit includes: an event obtaining module, configured to obtain reminding events stored in the preset memory region; and an event determining module, configured to obtain the target reminding event with a reminding time closest to a current time from the reminding events.

In the above examples, when there are multiple reminding events, the target reminding event with the reminding time closest to the current time may be obtained from the reminding events, such that the reminding event with the earliest reminding time is reminded of preferentially.

Alternatively, the event reminding sub-unit includes at least one of: a first reminding module, configured to obtain a reminding content for the target reminding event, and to remind of the reminding content; a second reminding module, configured to obtain a reminding language for the target reminding event, and to remind of the reminding content in the reminding language; a third reminding module, configured to obtain ring data for the target reminding event, and to play the ring data; a fourth reminding module, configured to obtain a vibration identification for the target reminding event, and to perform a vibration reminding according to the vibration identification; and a fifth reminding module, configured to obtain a repeat reminding instruction for the target reminding event, and to perform a repeat reminding according to the repeat reminding instruction.

In the above examples, the reminding event may include the reminding content, and the reminding content set by the user may be reminded of; the reminding event may also include the reminding language, and the language for the reminding content may be limited by the reminding language; the reminding event may also include ring data, and when the reminding time is reached, the ring data may be called to play, such that the preset reminding program may be avoided from storing a lot of ring data, thus saving resources; the reminding event may also include the vibration identification, the vibration reminding may be performed according to the vibration identification when the vibration identification is obtained, thus realizing the vibration reminding; and the reminding event may also include the repeat reminding instruction, and the repeat reminding may be realized according to the repeat reminding instruction. The users may choose a reminding way according to various demands, such that the user experience is improved.

Alternatively, the device further includes: a second counting time determining unit, configured to obtain a new target reminding time closest to the current time from unexecuted reminding events after the target reminding event is completed, and to determine a second counting time according to the new target reminding time; a second counting time writing unit, configured to write the second counting time into the clock circuit; and a shutdown unit, configured to perform a shutdown.

In the above examples, the new target reminding time closest to the current time may be obtained from unexecuted reminding events, the second counting time is determined according to the new target reminding time, the second counting time is written into the clock circuit, and then the shutdown is performed, such that the reminding for the unexecuted reminding events may be performed in the shutdown state, and also the electricity-consumption is reduced.

Alternatively, the device further includes: an identifying unit, configured to identify the target reminding event completed with an executed identification.

In the above examples, the target reminding event completed may be identified with the executed identification, which is convenient for the system to determine whether the target reminding event is executed via the identification.

Alternatively, the device further includes: an updating unit, configured to obtain reminding events from the preset memory region after a startup, and to update a database corresponding to the reminding program in the operating system according to the identifications of the reminding events.

In the above examples, data stored in the preset memory region may be updated synchronously into the database, such that the reminding for the unexecuted reminding events may be performed after the startup, thus avoiding missed reminding.

According to examples of a third aspect of the present disclosure, a device for reminding in a shutdown state is provided. The device includes: a processor; and a memory, configured to store instructions executable by the processor; in which, the processor is configured to: receive a wakeup instruction from a clock circuit in a shutdown state; execute a preset initialization operation according to the wakeup instruction, in which the preset initialization operation does not include starting an operating system; and execute a preset reminding program according to a pre-stored reminding event after the preset initialization operation is completed.

In the above examples, the wakeup instruction is received from the clock circuit in the shutdown state, the preset initialization operation is executed according to the wakeup instruction, and the preset reminding program is executed according to the pre-stored reminding event after the preset initialization operation is completed, such that the reminding event may still be reminded even if the operating system is not started, a time-consuming problem and an electricity-consuming problem caused by starting the operating system may be avoided, the electric energy may be saved, and meanwhile a call function will not be started, a radio frequency radiation may be prevented, and the user experience is improved.

It should be understood that, the above general description and following detail description are exemplary and explanatory, and shall not be construed to limit the present disclosure.

### BRIEF DESCRIPTION OF THE DRAWINGS

Fig. 1 is a flow chart of a method for reminding in a shutdown state according to an example embodiment of the present disclosure.
Fig. 2A is a flow chart of another method for reminding in a shutdown state according to an example embodiment of the present disclosure.
Fig. 2B is a schematic diagram of an alarm clock reminding interface with Chinese as a reminding language according to an example embodiment of the present disclosure.
Fig. 2C is a schematic diagram of an alarm clock reminding interface with English as a reminding language according to an example embodiment of the present disclosure.
Fig. 2D is a schematic diagram of a calendar reminding interface with English as a reminding language according to an example embodiment of the present disclosure.
Fig. 3 is a block diagram of a device for reminding in a shutdown state according to an example embodiment of the present disclosure.
Figs. 4 to 11 are block diagrams of other devices for reminding in a shutdown state according to example embodiments of the present disclosure.
Fig. 12 is a block diagram of a device 1200 for reminding in a shutdown state according to example embodiments of the present disclosure.

The accompanying drawings, which are incorporated in and constitute a part of this specification, illustrate embodiments consistent with the invention and, together with the description, serve to explain the principles of the invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

Although terms such as "first" and "second" are used herein for describing various elements, these elements should not be limited by these terms. These terms are only used for distinguishing one element from another element. For example, a first sequencing criterion may also be called a second sequencing criterion, and similarly, the second sequencing criterion may also be called the first sequencing criterion, without departing from the scope of the present disclosure. As used herein, the term "if' may be construed to mean "when" or "upon" or "in response to determining" or "in accordance with a determination" or "in response to detecting," that a stated condition precedent is true, depending on the context.

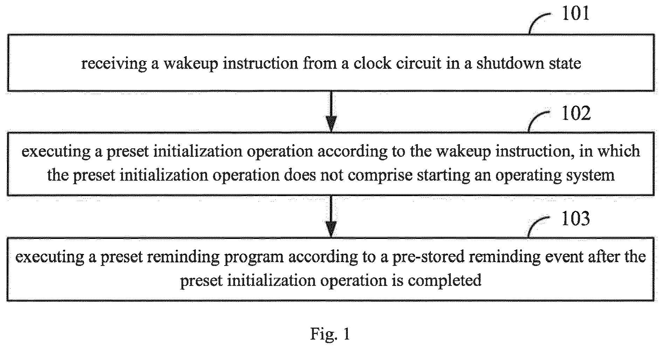

Fig. 1 is a flow chart of another method for reminding in a shutdown state according to an example embodiment of the present disclosure. As shown in Fig. 1, the method may be used in a terminal, including steps as follows.

In step 101, a wakeup instruction is received from a clock circuit of the terminal in a shutdown state.

The terminal in the present disclosure may be any smart terminal integrated with an alarm function, e.g. a smart phone, a tablet, and a PDA (Personal Digital Assistant).

In the terminal, a reminding program, which is not dependent upon an operating system and may operate independently, is preset. The preset reminding program is configured for reminding. For example, the reminding program may be an alarm program, a calendar program, a reminder program, and any program with the reminding function. The reminding program may have a simple display and alarm function, and may also have functions of a reminding program in the operating system.

In the shutdown state of the terminal, the wakeup instruction may be received from the clock circuit when a counting time is reached. The clock circuit has a timer function, and in the shutdown state, the clock circuit still remains power supply and may count time in real time. The clock circuit may be a RTC (Real-Time Clock). The RTC provides a reliable time for the operating system; in a power-off situation, the RTC may also operate continuously via power offered by a battery.

In step 102, a preset initialization operation is executed according to the wakeup instruction, in which the preset initialization operation does not include starting an operating system.

The preset initialization operation is an initialization operation which is set in advance, and the present initialization operation does not include starting the operating system, but may include a hardware initialization. The hardware initialization may be, for example, a u-boot program configured to start initializations of RAM, storage mediums, display systems, audio systems, and other hardware components on the device. Furthermore, after receiving the wakeup instruction, the power on may be performed, a central process unit is started, and the hardware initialization is performed. Part of the u-boot program may include the downloading and running of executable files for initializing the hardware components, where the executable files may include the reminding program described herein. It follows that the hardware initialization according to the preset initialization operation may identify one or more specific hardware, or software, components for initialization while the device is in the shutdown state. In order to save time during an initialization time, only a graphics card initialization, a sound card initialization, and a memory initialization may be performed. The preset initialization operation does not include starting the operating system, i.e. after receiving the wakeup instruction and performing the hardware initialization, the operating system is not started, and the preset reminding program is executed directly according to the pre-stored reminding event, such that the reminding for the reminding event is realized.

In step 103, the preset reminding program is executed according to the pre-stored reminding event after the preset initialization operation is completed.

The pre-stored reminding event may be a reminding event pre-stored in a startup state.

In an implementation, the time for storing the reminding event may be set to be before the shutdown. Before the shutdown, it is determined whether there is a reminding event, and if yes, the reminding event is written into a preset memory region. In the startup state, the user may set the reminding event via the reminding interface, and if a reminding event is detected before the shutdown and the reminding event is not executed, the reminding event may be stored in the preset memory region. The preset memory region may be a pre-assigned memory region, e.g. a pre-determined drive available on the device, such as an F disk. The objective for storing the reminding event in the preset memory region is to obtain relevant information of the reminding event in the shutdown state when the operating system is not started. It follows that the reminding program may access a drive portion of a memory included with the device even when the operating system is not running.

In another implementation, the reminding event may be written into the preset memory region when the user sets the reminding event. In the startup state, the user may set the reminding event via the reminding interface, and when the user chooses to remind of the reminding event only in the shutdown state, the reminding event may be written into the preset memory region when the user sets the reminding event. For example, the user wants to get up at 7:00 am, and then an alarm of 7:00 am may be set. Usually, a cellphone is shut down before sleep, so the cellphone is in the shutdown state before the user gets up, and the cellphone will be started after the user gets up. In order to avoid the interruption of the alarm if the user gets up earlier, the requirement of setting the alarm event is: executing an alarm reminding at 7:00 am in the shutdown state, and not executing the alarm reminding at 7:00 am in the startup state. For this kind of alarm event, since the alarm reminding will not be performed in the startup state, the alarm reminding event may be written into the preset memory region when the user sets the alarm event.

The reminding event includes at least the reminding time of the event, e.g. when the reminding time is reached, a ring reminding is performed directly according to a built-in ringtone. The reminding event may also include one or more of a reminding content, a reminding language, ring data, a vibration identification, and a repeat reminding instruction. The reminding content is a specific content to be reminded of, which may be used to display or play. For example, in a calendar program, the user may set a specific reminding content, such as: "The birthday of my wife, remember to buy some flowers". The reminding language is a display language for the reminding content, e.g. the reminding language may be Chinese, English, and Japanese etc. For the reminding content to be displayed, the reminding content may be displayed in the reminding language, and for the reminding content to be played, the reminding content may be played in the reminding language.

In the above embodiments, the wakeup instruction is received from the clock circuit in the shutdown state, the preset initialization operation is executed according to the wakeup instruction, and the preset reminding program is executed according to the pre-stored reminding event after the preset initialization operation is completed, such that the reminding event may still be reminded of even if the operating system is not started, a time-consuming problem and an electricity-consuming problem caused by starting the operating system may be avoided, the electric energy may be saved, and meanwhile a call function will not be started, a radio frequency radiation may be prevented, and the user experience is improved.

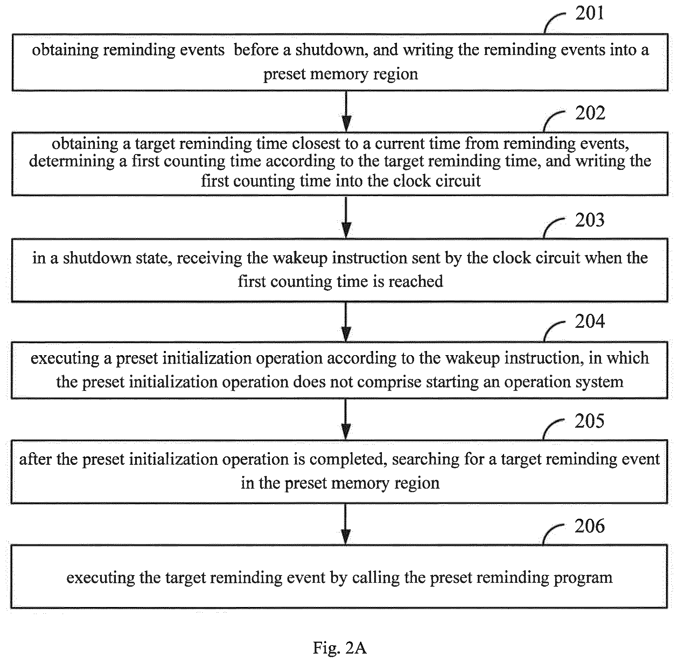

Fig. 2A is a flow chart of another method for reminding in a shutdown state according to an example embodiment of the present disclosure. As shown in Fig. 2A, the method may be used in a terminal, including steps as follows.

In step 201, reminding events are obtained before a shutdown, and the reminding events are written into the present memory region.

The terminal in the present disclosure may be any smart terminal integrated with an alarm function, e.g. a smart phone, a tablet, and a PDA (Personal Digital Assistant).

In the terminal, a reminding program, which is not dependent upon an operating system and may operate independently, is installed on the device with preset configurations. The preset reminding program is configured for reminding. For example, the reminding program may be an alarm program, a calendar program, a reminding program, and any program with the reminding function. The reminding program may have a simple display and alarm function, and may also have functions of a reminding program in the operating system.

Before the shutdown, the unprocessed reminding events may be obtained, and the reminding event may include information related to reminding, e.g. a reminding time, a reminding content, a reminding language, ring data, and a vibration identification.

The preset memory region may be a pre-determined memory region, e.g. a pre-determined drive available on the device, such as an E disk. After the reminding event is obtained, the reminding event may be stored in the preset memory region.

In step 202, a target reminding time closest to a current time is obtained from reminding events, a first counting time is determined according to the target reminding time, and the first counting time is written into the clock circuit.

Since the reminding events obtained are unprocessed events, the target reminding time closest to the current time may be obtained from the reminding events after the reminding events are obtained, i.e. the reminding time of the event to be reminded of at earliest is obtained and determined as the target reminding time. After the target reminding time is determined, the first counting time for the clock circuit may be determined according to the target reminding time.

If a time consumed in the preset initialization operation process cannot be neglected, the reserved time may be determined according to the recorded time consumed in the preset initialization operation process, and the first counting time may be obtained by the target reminding time minus the current time and minus the reserved time. For example, the current time is 12:00, the reminding time is 13:00, a time difference between the reminding time and the current time is obtained as 60 minutes, the reserved time may be 10 seconds, and then the first counting time is 59 minutes and 50 seconds. The first counting time is written into the clock circuit, and the clock circuit may start counting and send the wakeup instruction when 59 minutes and 50 seconds is reached. For the clock circuit that can determine the current time, the time difference between the target reminding time and the reserved time may be directly determined as the first counting time, and then the first counting time is written into the clock circuit, such that the clock circuit sends the wakeup instruction when the first counting time is reached.

If the time consumed in the preset initialization operation process can be neglected, the time difference between the target reminding time and the current time may be determined as the first counting time, or the target reminding time may be directly determined as the first counting time, and then the first counting time is made accessible to the clock circuit, such that the clock circuit sends the wakeup instruction when the first counting time is reached.

It should be understood that, the current time in the present disclosure is a time corresponding to the present moment, and is a time in the present process state.

In step 203, in the shutdown state, the wakeup instruction sent by the clock circuit when the first counting time is reached is received.

In step 204, the preset initialization operation is executed according to the wakeup instruction, in which the preset initialization operation does not include starting the operating system.

After receiving the wakeup instruction, the power on is performed, a central process unit is started, and the hardware initialization is performed. In order to save an initialization time, only a graphics card initialization, a sound card initialization, and a memory initialization may be performed. The preset initialization operation does not include starting the operating system, i.e. after receiving the wakeup instruction and perform the hardware initialization, the operating system is not started, but the preset reminding program is executed directly by the pre-stored reminding event, such that the reminding for the reminding event is realized.

In step 205, after the preset initialization operation is completed, the target reminding event is searched for in a preset memory region.

After the preset initialization operation is completed, the reminding event stored in the preset memory region is obtained; if there is only one reminding event in the preset memory region, the reminding event is obtained, and the reminding event is determined as the target reminding event. If there are multiple reminding events in the preset memory region, and each reminding event includes at least one reminding time, then the target reminding event (the target reminding event corresponding to the target reminding time) corresponding to the reminding time closest to the current time is obtained from the reminding events, i.e. a reminding time closest to the current time is obtained, and the reminding event corresponding to the closest reminding time is regarded as the target reminding event.

In step 206, the target reminding event is executed by calling the preset reminding program.

The preset reminding program may be called to execute the target reminding event in the present disclosure. The reminding program may remind of the target reminding event in the moment being called, and may also obtain the current time and remind of the target reminding event when the current time is identical with the reminding time of the target reminding event.

In an alternative implementation, executing the target reminding event includes at least one of ways as follows.

In a first way, a reminding content for the target reminding event is obtained, and the reminding content is reminded of.

When setting the reminding event, the user may set the reminding content, and the reminding content specifically describes specific content which the user needs to be reminded of. Existing formats of the reminding content may be a text format, a picture display, an animation form, and may also be a sound format etc. The reminding content may include content with one format, and may also include content with various formats. When the reminding time is reached, the text, the picture, or the animation, may be displayed and the sound may be played.

In a second way, a reminding language for the target reminding event is obtained, and the reminding content is reminded in the reminding language.

When setting the reminding event, the user may choose the reminding language, e.g. Chinese, English, and Korean. The reminding content may be preset, and may also be set when the user sets the reminding event. After the reminding language is obtained, the reminding content may be translated into the reminding language, and then the reminding is performed. Illustration may be made by taking the preset content as an example of the reminding content.

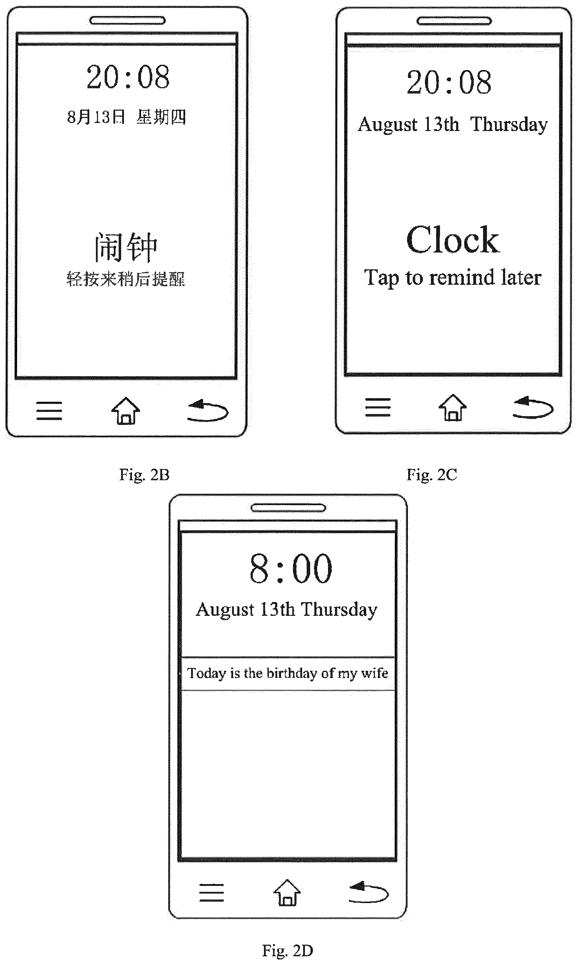

In the alarm program, the reminding content is always preset. Fig. 2B is a schematic diagram of an alarm clock reminding interface with Chinese as a reminding language according to an example embodiment of the present disclosure. As shown in Fig. 2B, if the reminding language is Chinese, it is determined whether the current reminding content is in Chinese, and if yes, the reminding contents "20:08", "8 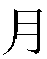 13 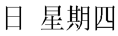 ", " 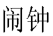 ", and " 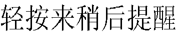 " are directly displayed on an alarm reminding interface. Fig. 2C is a schematic diagram of an alarm clock reminding interface with English as a reminding language according to an example embodiment of the present disclosure. As shown in Fig. 2C, if the reminding language is English, it is determined whether the current reminding content is in English, and if no, the reminding content is translated to English, and the reminding contents "20:08", "August 13th Thursday", "Clock", and "Tap to remind later" are displayed on the alarm reminding interface.

Illustration will be made below by taking the content set by the user when setting the reminding event as an example of the reminding content.

In the calendar program or the reminding program, the reminding content usually needs to be set by the user. Fig. 2D is a schematic diagram of a calendar reminding interface with English as a reminding language according to an example embodiment of the present disclosure. As shown in Fig. 2D, if the reminding language is English, it is determined whether the current reminding content is in English, and if no, the reminding content stored is translated to English, and the reminding contents "8:00", "August 13th Thursday" and "Today is the birthday of my wife" are displayed on the calendar reminding interface.

It should be understood that, the existing formats of the reminding content may be the text format, the picture display, the animation form, and may also be the sound format etc. When the content format is in a playing format, the reminding content may be played in the reminding language, which shall not be limited herein.

In a third way, ring data for the target reminding event is obtained, and the ring data is played.

A target reminding application may be a reminding application having a playing or a display function; in order to save memory space, a fixed ring or display content may be stored. Before the shutdown, if the user sets a ring different from the fixed ring, then the ring data corresponding to the ring set by the user may be obtained, and the ring data is divided into the target reminding event and stored in the preset memory region. When the reminding time is reached, the ring data may be called to play, such that the preset reminding program may be avoided from storing a mass of ring data, and the resource is saved.

In a fourth way, a vibration identification for the target reminding event is obtained, and a vibration reminding is performed according to the vibration identification. The vibration may be achieved by activating a vibrating motor included in the device. The vibration identification may include information for identifying a vibration pattern and/or vibration motor activation length.

In the above way, a vibration indicator may be used to identify whether the vibration is to be performed when reminding. Before the shutdown, the user may set whether the vibration is to be performed when reminding. When the user sets the vibration is to be performed, the vibration indicator is the vibration identification, and when the user sets the vibration is not to be performed, the vibration indicator is a non-vibration identification. For example, the vibration identification may be represented as 1, and the non-vibration identification may be represented as 0. The vibration identification is divided into the target reminding event and stored in the preset memory region. When the reminding time is reached, the vibration indicator is used to determine whether the vibration is to be performed, and a vibration reminding is performed according to the vibration identification when the vibration identification is obtained. For example, when the vibration identification identifies a '1', the vibration function may be implemented on the device. When the non-vibration identification identifies a '0', the vibration function may not be implemented, or suppressed, on the device.

In the above embodiment, when the vibration identification is obtained, the vibration reminding is performed according to the vibration identification, such that the vibration reminding is realized.

In a fifth way, a repeat reminding instruction for the target reminding event is obtained, and a repeat reminding is performed according to the repeat reminding instruction.

The repeat reminding instruction may be used to identify a repeat reminding and an interval of the repeat reminding. Before the shutdown, the user may set whether the repeat reminding is to be performed, when the user sets the repeat reminding is to be performed, the interval of the repeat reminding may be set according to the requirement, and also a fixed interval of the repeat reminding may be obtained. The repeat reminding instruction is divided into the target reminding event and stored in the preset memory region. When the reminding time is reached, a repeat reminding may be performed according to the repeat reminding instruction.

In the above embodiment, the repeat reminding is realized according to the repeat reminding instruction.

In an alternative implementation, after executing the target reminding event by calling the preset reminding program, the method further includes: obtaining a new target reminding time closest to the current time from unexecuted reminding events after the target reminding event is completed; determining a second counting time according to the new target reminding time; writing the second counting time into the clock circuit; and performing a shutdown.

The method for calculating the second counting time is identical with the method for calculating the first counting time, which shall not be elaborated herein. After the target reminding event is completed, the target reminding event completed may be deleted, and target reminding event completed may also be marked as executed. The new target reminding time closest to the current time may be obtained from unexecuted reminding events, the second counting time is determined according to the new target reminding time, the second counting time is written into the clock circuit, and the shutdown is performed, such that the reminding for the unexecuted reminding events may be performed in the shutdown state, and also the electricity-consumption is reduced.

In an alternative implementation, after executing the target reminding event by calling the preset reminding program, the method further includes: identifying the target reminding event completed with an executed identification. Reminding events are obtained from the preset memory region after a startup, and a database corresponding to the reminding program in the operating system is updated according to the identifications of the reminding events.

In the above embodiments, the reminding program is set in the operating system, and the reminding program may perform a reminding according to contents in the database. With the method, data stored in the preset memory region may be updated synchronously into the database, such that the reminding for the unexecuted reminding events may be performed after the startup, and missed reminding may be avoided.

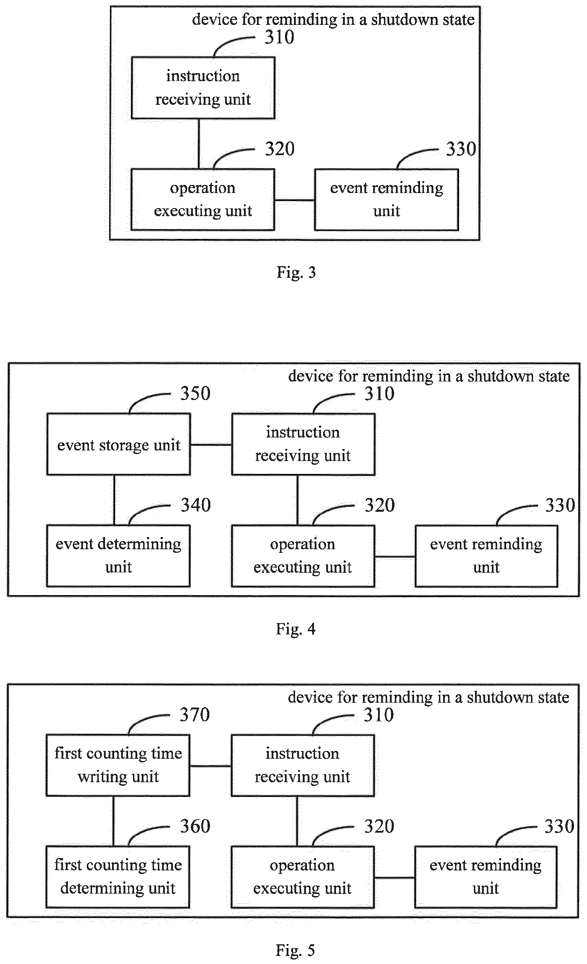

As shown in Fig. 3, Fig. 3 is a block diagram of a device for reminding in a shutdown state according to an example embodiment of the present disclosure. The device may be used in a smart terminal, and includes an instruction receiving unit 310, an operation executing unit 320, and an event reminding unit 330.

The instruction receiving unit 310 is configured to receive a wakeup instruction from a clock circuit in a shutdown state.

The operation executing unit 320 is configured to execute a preset initialization operation according to the wakeup instruction, in which the preset initialization operation does not comprise starting an operating system.

The event reminding unit 330 is configured to execute a preset reminding program according to a pre-stored reminding event after the preset initialization operation is completed.

In the above embodiments, the wakeup instruction is received from the clock circuit in the shutdown state, the preset initialization operation is executed according to the wakeup instruction, and the preset reminding program is executed according to the pre-stored reminding event after the preset initialization operation is completed, such that the reminding event may still be reminded of even if the operating system is not started, a time-consuming problem and an electricity-consuming problem caused by starting the operating system may be avoided, the electric energy may be saved, and meanwhile a call function will not be started, a radio frequency radiation may be prevented, and the user experience is improved.

As shown in Fig. 4, Fig .4 is a block diagram of another device for reminding in a shutdown state according to an example embodiment of the present disclosure. On the basis of the example embodiment shown in Fig. 3, the device further includes: an event determining unit 340 and an event memory unit 350.

The event determining unit 340 is configured to determine whether there is a reminding event before a shutdown.

The event storage unit 350 is configured to write the reminding events into a preset memory region if there is a reminding event.

In the above embodiments, by determining whether there is a reminding event before the shutdown, and writing the reminding event into the preset memory region, the reminding event may still be reminded of even if the operating system is not started, and the reminding for the reminding event is realized.

As shown in Fig. 5, Fig .5 is a block diagram of another device for reminding in a shutdown state according to an example embodiment of the present disclosure. On the basis of the example embodiment shown in Fig. 3, the device further includes: a first counting time determining unit 360 and a first counting time writing unit 370.

The first counting time determining unit 360 is configured to obtain a target reminding time closest to a current time from reminding events before the shutdown, and to determine a first counting time according to the target reminding time.

The first counting time writing unit 370 is configured to write the first counting time into the clock circuit.

The instruction receiving unit is configured to receive the wakeup instruction sent by the clock circuit when the first counting time is reached.

In the above embodiments, the first counting time may be determined according to the target reminding time closes to the current time, and the first counting time is written into the clock circuit, such that the wakeup instruction sent by the clock circuit when the first counting time is reached is received, and reminding for the reminding event with the earliest reminding time is realized. Meanwhile, the cost of the clock circuit may be reduced, since only one counting time is written into the clock circuit.

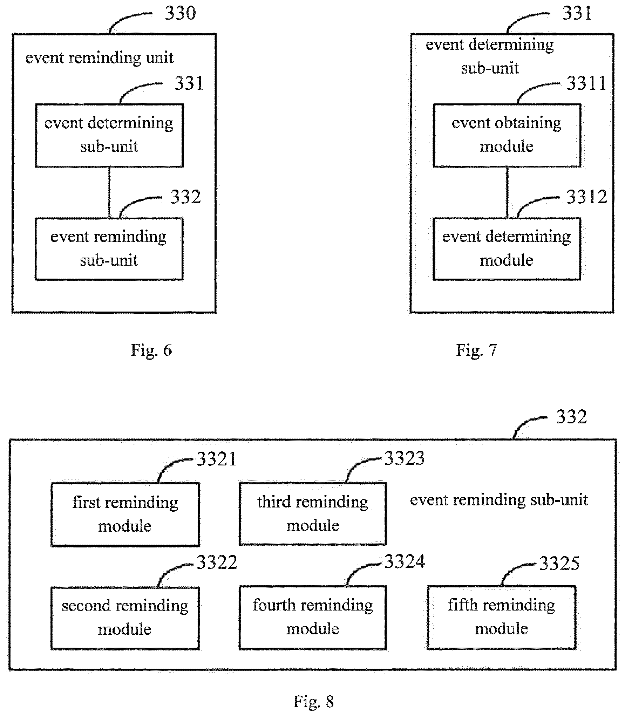

As shown in Fig. 6, Fig .6 is a block diagram of another device for reminding in a shutdown state according to an example embodiment of the present disclosure. On the basis of the example embodiment shown in Fig. 3, the event reminding unit 330 includes: an event determining sub-unit 331 and an event reminding sub-unit 332.

The event determining sub-unit 331 is configured to search for a target reminding event in a preset memory region.

The event reminding sub-unit 332 is configured to execute the target reminding event by calling the preset reminding program.

In the above embodiments, the target reminding event may be found in the preset memory region, and the target reminding event may be executed by calling the preset reminding program, such that the reminding for the target reminding event is realized.

As shown in Fig. 7, Fig .7 is a block diagram of another device for reminding in a shutdown state according to an example embodiment of the present disclosure. On the basis of the example embodiment shown in Fig. 6, the event determining sub-unit 331 includes: an event obtaining module 3311 and an event determining module 3312.

The event obtaining module 3311 is configured to obtain reminding events stored in the preset memory region.

The event determining module 3312 is configured to obtain the target reminding event with a reminding time closest to a current time from the reminding events.

In the above embodiments, when there are multiple reminding events, the target reminding event with the reminding time closest to the current time may be obtained from the reminding events, such that the reminding event with the earliest reminding time is reminded of preferentially.

As shown in Fig. 8, Fig .8 is a block diagram of another device for reminding in a shutdown state according to an example embodiment of the present disclosure. On the basis of the example embodiment shown in Fig. 6, the event reminding sub-unit 332 includes at least one of following modules. For the sake of clear illustration, Fig. 8 shows all the modules which may be included in the event reminding sub-unit 332, i.e., a first reminding module 3321, a second reminding module 3322, a third reminding module 3323, a fourth reminding module 3324, and a fifth reminding module 3325.

The first reminding module 3321 is configured to obtain a reminding content for the target reminding event, and to remind of the reminding content.

The second reminding module 3322 is configured to obtain a reminding language for the target reminding event, and to remind of the reminding content in the reminding language.

The third reminding module 3323 is configured to obtain ring data for the target reminding event, and to play the ring data.

The fourth reminding module 3324 is configured to obtain a vibration identification for the target reminding event, and to perform a vibration reminding according to the vibration identification

The fifth reminding module 3325 is configured to obtain a repeat reminding instruction for the target reminding event, and to perform a repeat reminding according to the repeat reminding instruction.

In the above embodiments, the reminding event may include the reminding content, and the reminding content set by the user may be reminded of; the reminding event may also include the reminding language, and the language for the reminding content may be may be limited by the reminding language; the reminding event may also include ring data, and when the reminding time is reached, the ring data may be called to play, such that the preset reminding program may be avoided from storing a lot of ring data, thus saving resources; the reminding event may also include the vibration identification, the vibration reminding may be performed according to the vibration identification when the vibration identification is obtained, thus realizing the vibration reminding; and the reminding event may also include the repeat reminding instruction, and the repeat reminding may be realized according to the repeat reminding instruction. The users may choose a reminding way according to various demands, such that the user experience is improved.

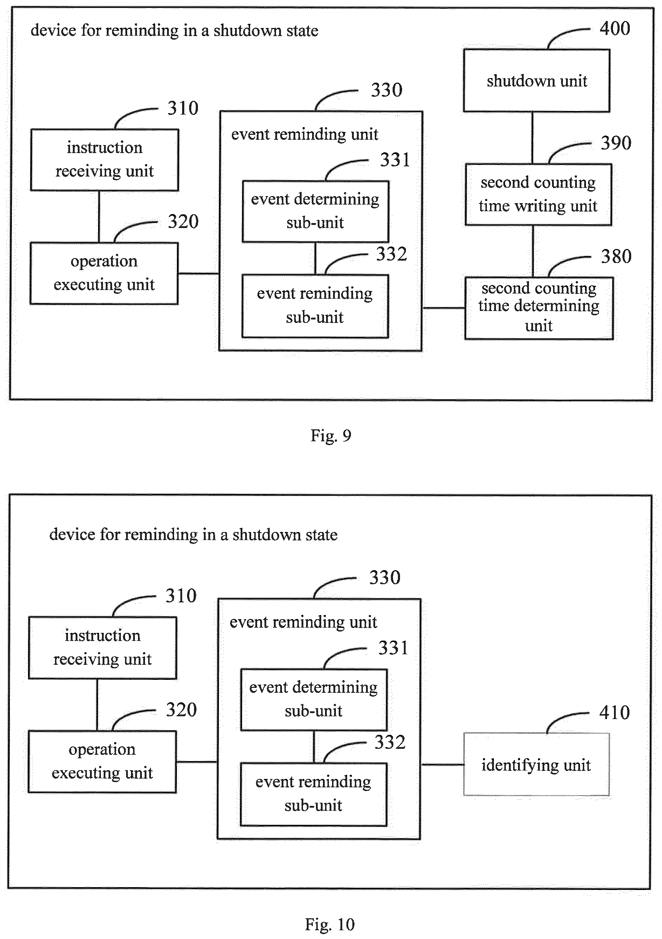

As shown in Fig. 9, Fig .9 is a block diagram of another device for reminding in a shutdown state according to an example embodiment of the present disclosure. On the basis of the example embodiment shown in Fig. 6, the device further includes: a second counting time determining unit 380, a second counting time writing unit 390 and a shutdown unit 400.

The second counting time determining unit 380 is configured to obtain a new target reminding time closest to the current time from unexecuted reminding events after the target reminding event is completed, and to determine a second counting time according to the new target reminding time.

The second counting time writing unit 390 is configured to write the second counting time into the clock circuit.

The shutdown unit 400 is configured to perform a shutdown.

In the above embodiments, the new target reminding time closest to the current time may be obtained from unexecuted reminding events, the second counting time is determined according to the new target reminding time, the second counting time is written into the clock circuit, and then the shutdown is performed, such that the reminding for the unexecuted reminding events may be performed in the shutdown state, and also the electricity-consumption is reduced.

As shown in Fig. 10, Fig .10 is a block diagram of another device for reminding in a shutdown state according to an example embodiment of the present disclosure. On the basis of the example embodiment shown in Fig. 6, the device further includes: an identifying unit 410.

The identifying unit 410 is configured to identify the target reminding event completed with an executed identification.

In the above embodiments, the target reminding event completed may be identified with the executed identification, which is convenient for the system to determine whether the target reminding event is executed via the identification.

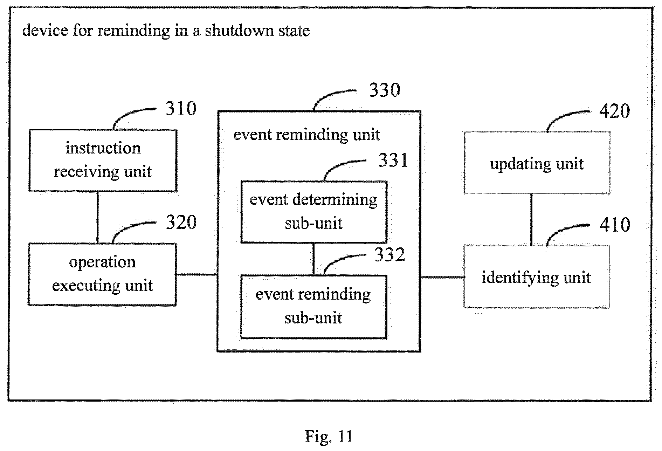

As shown in Fig. 11, Fig .11 is a block diagram of another device for reminding in a shutdown state according to an example embodiment of the present disclosure. On the basis of the example embodiment shown in Fig. 10, the device further includes: an updating unit 420.

The updating unit 420 is configured to obtain reminding events from the preset memory region after a startup, and to update a database corresponding to the reminding program in the operating system according to the identifications of the reminding events.

In the above embodiments, data stored in the preset memory region may be updated synchronously into the database, such that the reminding for the unexecuted reminding events may be performed after the startup, and a missed reminding may be avoided.

Accordingly, the present disclosure further provides another device for reminding in a shutdown state. The device includes a processor, and a memory configured to store instructions executable by the processor, in which, the processor is configured to:
receive a wakeup instruction from a clock circuit in a shutdown state;
execute a preset initialization operation according to the wakeup instruction, in which the preset initialization operation does not include starting an operating system; and
execute a preset reminding program according to a pre-stored reminding event after the preset initialization operation is completed.

With respect to the devices in the above embodiments, the specific operation modes of individual modules therein have been described in detail in the embodiments regarding the methods for reminding in a shutdown state, which will not be elaborated herein.

With respect to the device embodiments, relevant parts may be referred to the method embodiments since they are basically corresponding to the method embodiments. The device embodiments described above are merely illustrative, and units described as separate components may be or may not be physically separate, and components represented as units may be or may not be physical units, i.e., may be located at one place or may be distributed on multiple network units. Some or all of the modules may be chosen according to actual demands, for realizing the objectives of the present disclosure, which may be understood and implemented by those skilled in the art without creative labor.

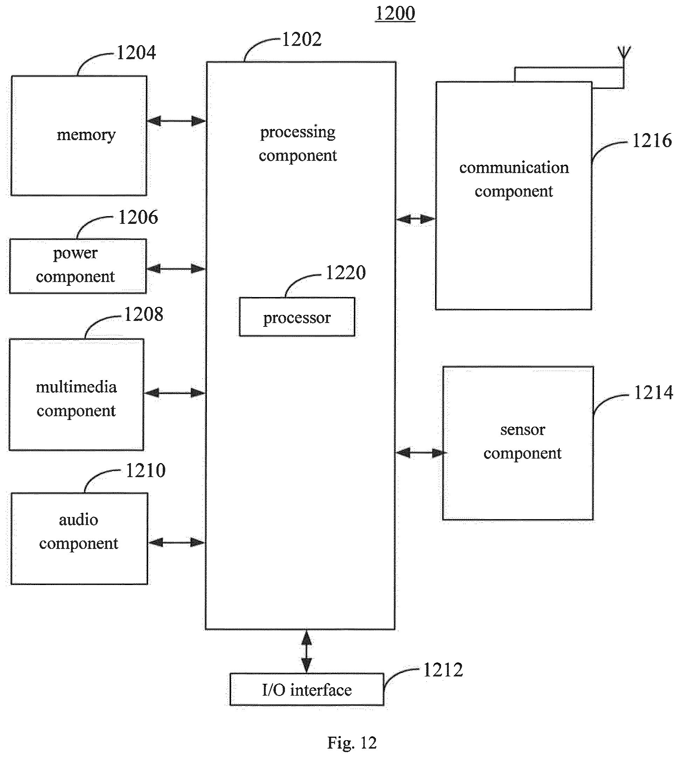

As shown in Fig. 12, Fig. 12 is a block diagram of a device 1200 for reminding in a shutdown state according to example embodiments of the present disclosure. For example, the terminal 1200 may be a mobile phone, a computer, a digital broadcasting terminal, a messaging device, a game console, a tablet device, a fitness equipment, a Personal Digital Assistant PDA, etc.

Referring to Fig. 12, the terminal 1200 may include the following one or more components: a processing component 1202, a memory 1204, a power component 1206, a multimedia component 1208, an audio component 1210, an Input/Output (I/O) interface 1212, a sensor component 1214, and a communication component 1216.

The processing component 1202 typically controls overall operations of the terminal 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the terminal 1200. Examples of such data include instructions for any applications or methods operated on the terminal 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the terminal 1200. The power component 1206 may include a power management system, one or more power sources, and any other components associated with the generation, management, and distribution of power in the terminal 1200.

The multimedia component 1208 includes a screen providing an output interface between the terminal 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 1208 includes a front camera and/or a rear camera. The front camera and the rear camera may receive external multimedia data while the terminal 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone (MIC) configured to receive an external audio signal when the intelligent terminal 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface for the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the terminal 1200. For instance, the sensor component 1214 may detect an open/closed status of the terminal 1200 and relative positioning of components (e.g. the display and the keypad of the terminal 1200). The sensor component 1214 may also detect a change in position of the terminal 1200 or of a component in the terminal 1200, a presence or absence of user contact with the terminal 1200, an orientation or an acceleration/deceleration of the terminal 1200, and a change in temperature of the terminal 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate wired or wireless communication between the terminal 1200 and other devices. The terminal 1200 can access a wireless network based on a communication standard, such as WIFI, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 1204 including instructions. The above instructions are executable by the processor 1220 in the terminal 1200, for performing the above-described methods. For example, the non-transitory computer-readable storage medium may be a ROM, a RAM, a CD-ROM, a magnetic tape, a floppy disc, an optical data storage device, and the like.

The non-transitory computer readable storage, when the instructions in the memory are executed by the processor in a terminal, the terminal may execute a method for reminding in a shutdown state.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

It will be appreciated that the present invention is not limited to the exact construction that has been described above and illustrated in the accompanying drawings, and that various modifications and changes can be made without departing form the scope thereof.

## Claims

1. A computer implemented method in a terminal for providing reminding events to a user, the method comprising:
in a startup state of the terminal, setting the reminding events based on input received from a user via a reminding interface, wherein first reminding events to be executed only in a shutdown state of the terminal among the reminding events are stored into a preset memory region;
before shutdown, determining if there are second reminding events among the reminding events which are not executed and storing them in the preset memory region, obtaining a target reminding time closest to a current time, the target reminding time
corresponding to a closest in time reminding event from the first and the second reminding events, determining a first counting time according to the target reminding time, and writing the first counting time into a clock circuit of the terminal;
after the shutdown, in a shutdown state, receiving (101) a wakeup instruction from the clock circuit of the terminal when the first counting time is reached;
executing (102) a preset initialization operation according to the wakeup instruction, wherein the preset initialization operation does not comprise starting an operating system of the terminal; and
executing (206) the closest reminding event by calling a preset reminding program that is not dependent upon the operating system after the preset initialization operation is completed; wherein the method further comprises:
after executing the closest reminding event, marking the closest reminding event as executed; and
after a startup of the operating system of the terminal:
obtaining the first and second reminding events from the preset memory region; and
synchronously updating a database corresponding to a reminding program in the operating system and performing reminding for unexecuted reminding events according to the updated database.

2. The method according to claim 1, wherein, executing (206) the closest reminding event comprises at least one of:
obtaining a reminding content for the closest reminding event, and reminding of the reminding content;
obtaining a reminding language for the closest reminding event, and reminding of the reminding content in the reminding language;
obtaining ring data for the closest reminding event, and playing the ring data;
obtaining a vibration identification for the closest reminding event, and performing a vibration reminding according to the vibration identification; and
obtaining a repeat reminding instruction for the closest reminding event, and performing a repeat reminding according to the repeat reminding instruction.

3. A terminal for providing reminding events to a user, the terminal comprising:
a clock circuit;
a reminding events setting unit, configured to, in a startup state of the terminal, set the reminding events based on input received from a user via a reminding interface, wherein first reminding events to be executed only in a shutdown state of the terminal among the reminding events are stored into a preset memory region; an event determining unit (340), configured to, before shutdown, determine if there are second reminding events among the reminding events which are not executed and store them in the preset memory region, obtain a target reminding time closest to a current, the target reminding time corresponding to a closest in time reminding event from the first and the second reminding events, determine a first counting time according to the target reminding time and write the first counting time into the clock circuit of the terminal;
an instruction receiving unit (310), configured to, after the shutdown, receive a wakeup instruction from the clock circuit of the terminal when the first counting time is reached ;
an operation executing unit (320), configured to execute a preset initialization operation according to the wakeup instruction, wherein the preset initialization operation does not comprise starting an operating system of the terminal; and
an event reminding unit (330), configured to execute a preset reminding program that is not dependent upon the operating system after the preset initialization operation is completed, wherein, the event reminding unit (330) comprises: an event reminding sub-unit (332), configured to execute the closest reminding event by calling the preset reminding program that is not dependent on the operating system after the preset initialization operation is completed;
wherein the device further includes:
an identifying unit (410) configured to, after executing the closest reminding event, mark the closest reminding event as executed,
after the event reminding sub-unit (332) has executed the closest reminding event;
a unit configured to obtain the first and second reminding events from the preset memory region, after a startup of the operating system of the terminal device; and
a unit configured to, after the startup, synchronously update a database corresponding to a reminding program in the operating system such that reminding is performed on unexecuted reminding events according to the updated database.

4. A computer program, which when executing on a processor of the terminal of claim 3, causes the processor to perform the method according to claim 1 or claim 2.

## Patentansprüche

1. Computerimplementiertes Verfahren in einem Endgerät zum Bereitstellen von Erinnerungsereignissen an einen Benutzer, wobei das Verfahren Folgendes umfasst:
in einem Startzustand des Endgeräts, Einstellen der Erinnerungsereignisse basierend auf von einem Benutzer über eine Erinnerungsschnittstelle empfangenen Eingaben, wobei nur in einem Abschaltzustand des Endgeräts auszuführende erste Erinnerungsereignisse unter den Erinnerungsereignissen in einem voreingestellten Speicherbereich gespeichert werden;
Bestimmen, vor dem Herunterfahren, ob zweite Erinnerungsereignisse zwischen den Erinnerungsereignissen vorliegen, die nicht ausgeführt werden, und
Speichern dieser in dem voreingestellten Speicherbereich, Erhalten einer Zielerinnerungszeit, die einer aktuellen Zeit am nächsten ist, wobei die Zielerinnerungszeit einem zeitlich am nächsten liegenden Erinnerungsereignis aus den ersten und den zweiten Erinnerungsereignissen entspricht, Bestimmen einer ersten Zählzeit gemäß der Zielerinnerungszeit und Schreiben der ersten Zählzeit in eine Taktschaltung des Endgeräts;
nach dem Herunterfahren, in einem Abschaltzustand, Empfangen (101) einer Aufweckanweisung von der Taktschaltung des Endgeräts, wenn die erste Zählzeit erreicht ist;
Ausführen (102) einer voreingestellten Initialisierungsoperation gemäß der Aufwachanweisung, wobei die voreingestellte Initialisierungsoperation kein Starten eines Betriebssystems des Endgeräts umfasst; und
Ausführen (206) des nächstliegenden Erinnerungsereignisses durch Aufrufen eines voreingestellten Erinnerungsprogramms, das nicht vom Betriebssystem abhängig ist, nachdem der voreingestellte Initialisierungsvorgang abgeschlossen ist; wobei das Verfahren ferner Folgendes umfasst:
nach dem Ausführen des nächsten Erinnerungsereignisses, Markieren des nächsten Erinnerungsereignisses als ausgeführt; und
nach einem Hochfahren des Betriebssystems des Endgeräts:
Erhalten des ersten und des zweiten Erinnerungsereignisses aus dem voreingestellten Speicherbereich; und
gleichzeitiges Aktualisieren einer Datenbank, die einem Erinnerungsprogramm im Betriebssystem entspricht, und
Durchführen einer Erinnerung für nicht ausgeführte Erinnerungsereignisse gemäß der aktualisierten Datenbank.

2. Verfahren nach Anspruch 1, wobei das Ausführen (206) des nächstliegenden Erinnerungsereignisses Folgendes umfasst:
wenigstens eines der Folgenden:
Erhalten eines Erinnerungsinhalts für das nächstliegende Erinnerungsereignis und Erinnern an den Erinnerungsinhalt;
Erhalten einer Erinnerungssprache für das nächstliegende Erinnerungsereignis und Erinnern an den Erinnerungsinhalt in der Erinnerungssprache;
Erhalten von Ringdaten für das nächstliegende Erinnerungsereignis und Abspielen der Ringdaten;
Erhalten einer Vibrationsidentifikation für das nächstliegende Erinnerungsereignis und Durchführen einer Vibrationserinnerung gemäß der Vibrationsidentifikation; und
Erhalten einer Wiederholungserinnerungsanweisung für das nächstliegende Erinnerungsereignis und Durchführen einer Wiederholungserinnerung gemäß der Wiederholungserinnerungsanweisung.

3. Endgerät zum Bereitstellen von Erinnerungsereignissen an einen Benutzer, wobei das Endgerät Folgendes umfasst:
eine Taktschaltung;
eine Erinnerungsereigniseinstelleinheit, konfiguriert, in einem Startzustand des Endgeräts, die Erinnerungsereignisse basierend auf von einem Benutzer über eine Erinnerungsschnittstelle empfangenen Eingaben einzustellen, wobei nur in einem Abschaltzustand des Endgeräts auszuführende erste Erinnerungsereignisse unter den Erinnerungsereignissen in einem voreingestellten Speicherbereich gespeichert werden;
eine Ereignisbestimmungseinheit (340), konfiguriert, vor dem Herunterfahren, zu bestimmen, ob zweite Erinnerungsereignisse zwischen den Erinnerungsereignissen vorliegen, die nicht ausgeführt werden, und diese in dem voreingestellten Speicherbereich zu halten, eine Zielerinnerungszeit zu erhalten, die einer aktuellen Zeit am nächsten ist, wobei die Zielerinnerungszeit einem zeitlich am nächsten liegenden Erinnerungsereignis aus den ersten und den zweiten Erinnerungsereignissen entspricht, eine erste Zählzeit gemäß der Zielerinnerungszeit zu bestimmen und die erste Zählzeit in eine Taktschaltung des Endgeräts zu schreiben;
eine Befehlsempfangseinheit (310), konfiguriert, nach dem Herunterfahren eine Aufweckanweisung von der Taktschaltung des Endgeräts zu empfangen, wenn die erste Zählzeit erreicht ist;
eine Operationsausführungseinheit (320), konfiguriert, eine voreingestellte Initialisierungsoperation gemäß der Aufwachanweisung auszuführen, wobei die voreingestellte Initialisierungsoperation kein Starten eines Betriebssystems des Endgeräts umfasst; und
eine Ereigniserinnerungseinheit (330), konfiguriert ist, ein voreingestelltes Erinnerungsprogramm auszuführen, das nicht vom Betriebssystem abhängig ist, nachdem der voreingestellte Initialisierungsvorgang abgeschlossen ist, wobei die Ereigniserinnerungseinheit (330) Folgendes umfasst: eine Ereigniserinnerungsuntereinheit (332), konfiguriert zum Ausführen des nächstliegenden Erinnerungsereignisses durch Aufrufen des voreingestellten Erinnerungsprogramms, das nicht vom Betriebssystem abhängig ist, nachdem der voreingestellte Initialisierungsvorgang abgeschlossen ist;
wobei die Vorrichtung ferner Folgendes enthält:
eine Identifikationseinheit (410), konfiguriert, nach dem Ausführen des nächsten Erinnerungsereignisses das nächstliegende Erinnerungsereignis als ausgeführt zu markieren, nachdem die Ereigniserinnerungsuntereinheit (332) das nächstliegende Erinnerungsereignis ausgeführt hat;
eine Einheit, konfiguriert, das erste und das zweite Erinnerungsereignis nach einem Hochfahren des Betriebssystems des Endgeräts aus dem voreingestellten Speicherbereich zu erhalten; und
eine Einheit, konfiguriert, nach dem Hochfahren synchron eine Datenbank zu aktualisieren, die einem Erinnerungsprogramm im Betriebssystem entspricht, sodass die Erinnerung an nicht ausgeführte Erinnerungsereignisse gemäß der aktualisierten Datenbank ausgeführt wird.

4. Computerprogramm, das, wenn auf einem Prozessor des Endgeräts nach Anspruch 3 ausführt, bewirkt, dass der Prozessor das Verfahren nach Anspruch 1 oder Anspruch 2 ausführt.

## Revendications

1. Procédé mis en oeuvre par ordinateur dans un terminal destiné à la fourniture à un utilisateur des événements de rappel, le procédé comprenant :
dans un état de démarrage du terminal, la définition des événements de rappel en fonction d'une entrée reçue en provenance d'un utilisateur par l'intermédiaire d'une interface de rappel, les premiers événements de rappel devant être exécutés uniquement dans un état d'arrêt du terminal parmi les événements de rappel étant mémorisés dans une région prédéfinie de la mémoire ;
avant l'arrêt, la détermination s'il existe de seconds événements de rappel parmi les événements de rappel qui ne sont pas exécutés et
leur mémorisation dans la région prédéfinie de la mémoire, l'obtention d'un instant de rappel cible le plus proche de l'instant actuel, l'instant de rappel cible
correspondant à un événement de rappel le plus proche dans le temps parmi les premier et second événements de rappel, la détermination d'un premier instant de comptage selon l'instant de rappel cible et l'écriture du premier instant de comptage dans un circuit d'horloge du terminal ;
après l'arrêt, dans un état d'arrêt, la réception (101) d'une instruction de réveil en provenance du circuit d'horloge du terminal lorsque le premier instant de comptage est atteint ;
l'exécution (102) d'une opération d'initialisation prédéfinie selon l'instruction de réveil, l'opération d'initialisation prédéfinie ne comprenant pas le démarrage d'un système d'exploitation du terminal ; et
l'exécution (206) de l'événement de rappel le plus proche en appelant un programme de rappel prédéfini qui ne dépend pas du système d'exploitation une fois l'opération d'initialisation prédéfinie terminée ; dans lequel le procédé comprend en outre :
après l'exécution de l'événement de rappel le plus proche, le marquage de l'événement de rappel le plus proche comme étant exécuté ; et
après un démarrage du système d'exploitation du terminal :
l'obtention des premier et second événements de rappel depuis la région de mémoire prédéfinie ; et la mise à jour de manière synchrone d'une base de données correspondant à un programme de rappel dans le système d'exploitation et la réalisation d'un rappel destiné aux événements de rappel non exécuté
selon la base de données mise à jour.

2. Procédé selon la revendication 1, dans lequel, l'exécution (206) de l'événement de rappel le plus proche comprend
au moins une étape parmi :
l'obtention d'un contenu de rappel destiné à l'événement de rappel le plus proche et le rappel du contenu de rappel ;
l'obtention d'un langage de rappel destiné à l'événement de rappel le plus proche et le rappel du
contenu de rappel dans le langage de rappel ;
l'obtention des données de sonnerie destinées à l'événement de rappel le plus proche et la lecture des données de sonnerie ;
l'obtention d'une identification de vibration destinée à l'événement de rappel le plus proche et la réalisation d'un rappel de vibration selon l'identification de vibration ; et
l'obtention d'une instruction de rappel de répétition destinée à l'événement de rappel le plus proche et la réalisation d'un rappel de répétition selon l'instruction de rappel de répétition.

3. Terminal destiné à la fourniture des événements de rappel destinés à un utilisateur, le terminal comprenant :
un circuit d'horloge ;
une unité de définition des événements de rappel, configurée pour, dans un état de démarrage du terminal, établir les événements de rappel en fonction d'une entrée reçue en provenance d'un utilisateur par l'intermédiaire d'une interface de rappel, les premiers événements de rappel devant être exécutés uniquement dans un état d'arrêt du terminal parmi les événements de rappel étant mémorisés dans une région prédéfinie de la mémoire ;
une unité de détermination d'événements (340) configurée pour, avant l'arrêt, déterminer s'il existe des seconds événements de rappel parmi les événements de rappel
qui ne sont pas exécutés et les mémoriser dans la région prédéfinie de la mémoire, obtenir un instant de rappel cible le plus proche de l'instant actuel, l'instant de rappel cible
correspondant à un événement de rappel le plus proche dans le temps parmi les premier et second événements de rappel, détermine un premier instant de comptage selon l'instant de rappel cible et écrire le premier instant de comptage dans le circuit d'horloge du terminal ;
une unité de réception d'instructions (310) configurée pour, après l'arrêt, recevoir une instruction de réveil en provenance du circuit d'horloge du terminal lorsque le premier instant de comptage est atteint ;
une unité d'exécution d'instructions (320) configurée pour exécuter une opération d'initialisation prédéfinie selon l'instruction de réveil, dans laquelle l'opération d'initialisation prédéfinie ne comprend pas le démarrage d'un système d'exploitation du terminal ; et
une unité de rappel d'événement (330) configurée pour exécuter un programme de rappel prédéfini qui ne dépend pas du système d'exploitation une fois l'opération d'initialisation prédéfinie terminée, l'unité de rappel d'événement (330) comprenant : une sous-unité de rappel d'événement (332) configurée pour exécuter l'événement de rappel le plus proche en appelant le programme de rappel prédéfini qui ne dépend pas du système d'exploitation une fois l'opération d'initialisation prédéfinie terminée ;
dans lequel le dispositif comprend en outre :
une unité d'identification (410) configurée pour, après l'exécution de l'événement de rappel le plus proche, marquer l'événement de rappel le plus proche comme étant exécuté,
après que la sous-unité de rappel d'événement (332) a exécuté l'événement de rappel le plus proche ;
une unité configurée pour obtenir les premier et second événements de rappel en provenance de la région de mémoire prédéfinie, après le démarrage du système d'exploitation du dispositif terminal ; et
une unité configurée pour, après la mise à jour de manière synchrone de démarrage d'une base de données correspondant à un programme de rappel dans le système d'exploitation de sorte que le rappel soit effectué sur des événements de rappel non exécutés selon la base de données mise à jour.

4. Programme d'ordinateur qui, lorsqu'il est exécuté sur un processeur du terminal de la revendication 3, amène le processeur à exécuter le procédé selon la revendication 1 ou la revendication 2.
